# EUROPEAN PATENT APPLICATION

(11) **EP 2 716 945 A1**
(43) Date of publication of application: **09.04.2014**
(21) Application number: 13186519.8
(22) Date of filing: 27.09.2013
(51) Int. Cl.: F16K 3/26, F16K 47/08

(54) **Flow trim for a valve**

(30) Priority: 05.10.2012 GB 201217881
(71) Applicant: Severn Glocon Limited, Gloucester, Gloucestershire GL2 4NF (GB)
(72) Inventor: Coates, Christopher, Dursley, Gloucestershire GL11 4PT (GB)
(74) Representative: Oxley, Robin John George

(57) **Abstract**

A trim means for a valve such as a choke, control and/or anti-surge control valve, comprising a plug (2) engageable with a seat (11), and including a plurality of flow control elements (8a, 8b) that are moveable along a path to control flow through the trim means, wherein: the flow control elements (8a, 8b) are spaced apart along the path, each flow control element (8a, 8b) defining a corresponding flow path, and movement of each flow control element (8a, 8b) along the path progressively varying the flow area through its corresponding flow path.

## Description

This invention relates to a flow trim for a valve, for example a choke, control and/or anti-surge control valve. It will be appreciated, however, that the flow trim may be used in other types of valve.

Choke, control and/or anti-surge control valves are examples of types of valve in which a fluid passes through a trim, which is adjustable to modify the flow coefficient of the valve, thereby controlling the pressure drop across, and/or the flow rate through the valve. In one arrangement, the trim comprises a substantially cylindrical cage with a plurality of slots or holes, and a plug which moves axially with respect to the cage. The plug and cage are arranged so that axial movement of the plug relative to the cage progressively opens the slots or holes of the cage. Such valves may also have a seat against which the plug seals in a closed position to prevent fluid flow through the valve. In a fully open position, the plug may leave open substantially all of the slots or holes of the cage.

Typically, the valve will include an annular region in fluid communication with the trim, resulting in the ability to dissipate fluid energy by the impingement of radial flows as they collide at the axis of the trim.

A time delay may be associated with adjusting the flow coefficient of such a valve, due to the time it takes the plug to travel between an open position and a closed position. This delay can be particularly pronounced with larger valves with increased flow capability, since these valves typically have plugs with longer travel distances. It is desirable to minimise the time it takes to adjust the trim of such a valve.

According to the present invention, there is provided a trim means for a valve, comprising a plug engageable with a seat, and including a plurality of flow control elements that are moveable along a path to control flow through the trim means, wherein: the flow control elements are spaced apart along the path, each flow control element defining a corresponding flow path, and movement of each flow control element along the path progressively varying the flow area through its corresponding flow path.

The plug may further comprise a linking fluid conduit that communicates between a first flow path and a second flow path.

The plug may have an axis along which it moves, thereby moving the flow control elements.

Each flow path may have a corresponding flow restrictor. The flow restrictor may comprise, for example, a substantially cylindrical cage with a plurality of slots or holes, a plurality of concentric cylindrical cages, each with a plurality of slots or holes, a labyrinthine flow conduit, or a stack of discs or plates that together define the restrictor. However, it will be appreciated that these are merely examples and that other arrangements are possible.

The plug conveniently has a circular cross section.

Each flow control element conveniently comprises a substantially cylindrical portion and each flow path comprises an annular region. Each flow path may be disposed at least partly around the exterior of the plug.

Conveniently, each of the flow control elements and corresponding flow paths have substantially the same configuration.

The plug may comprise a force balancing fluid conduit that communicates fluid pressure to a portion of the plug to reduce the net axial force on the plug that would result from use of the trim means with a pressurised fluid.

The invention further relates to a valve such as a choke, control and/or anti-surge control valve comprising the trim means described hereinbefore.

The invention will further be described, by way of example, with reference to the accompanying drawings, in which:
Figure 1 is a sectional view of a typical choke, control and/or anti-surge control valve; and
Figure 2 a sectional schematic of part of a choke, control and/or anti-surge control valve incorporating a flow trim according to an embodiment of the invention.

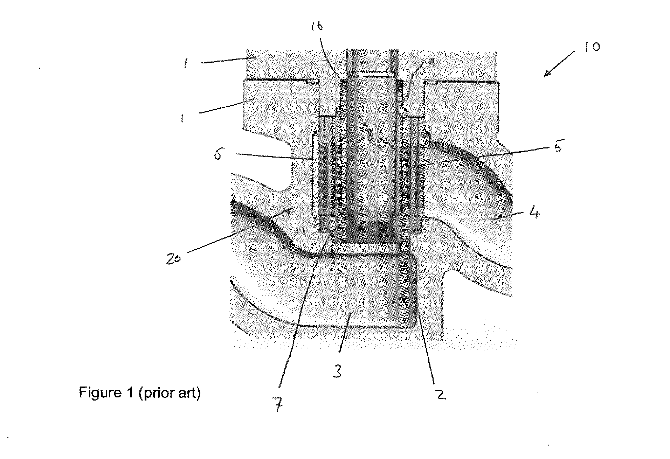

Referring firstly to Figure 1, a prior art choke, control and/or anti-surge control valve 10 is shown, comprising a two part valve body 1 and a trim means 20. The valve body 1 defines a first port 4 and a second port 3, and houses the trim means 20. The first port 4 communicates with an annular volume 6 around the trim means 20, and may be an inlet port. The second port 3 may be an outlet port. It will be appreciated that fluid flow through the valve may be in the direction described, or in the opposite direction. The trim means 20 controls the flow of fluid between the first and second ports 3, 4 and comprises a plug 2, flow restriction 5, plug seat 11, bearing 9 and seal 16.

The plug 2 is substantially cylindrical, and comprises a substantially cylindrical flow control element 8 and a sealing portion 7. The flow restriction 5 is a substantially cylindrical arrangement of concentric perforated cages, disposed concentrically around the plug 2, within the annular volume 6. The plug 2 is axially moveable by an actuation means (not shown) between a closed position in which the sealing portion 7 at one end of the plug 2 engages with the plug seat 11 to substantially prevent flow through the valve 10, and a fully open position in which the plug 2 does not limit flow through the valve 10. When the plug 2 is in the closed position, the flow control element 8 of the plug closes off the annular flow path through the flow restriction 5. As the plug 2 progressively moves axially towards the fully open position, the flow control element 8 of the plug moves to progressively uncover the flow area of the annular flow path through the flow restriction 5.

Bearing 9 and seal 16 are disposed between the plug 2 and housing 1 adjacent to the end of the plug 2 which is remote from the sealing portion 7, to mechanically support the plug 2 and to prevent escape of fluid respectively.

It will be appreciated that the time it takes to move the plug 2 between a fully closed position and a fully open position depends on the travel distance between these positions: a shorter travel distance results in a faster operating valve. However, a shorter travel distance means that the flow area in the fully open position is reduced because the axial extent of the flow path is reduced. A longer travel distance allows for an annular flow path with a greater axial extent, and consequently a greater flow area, but tends to reduce the speed of operation of the valve.

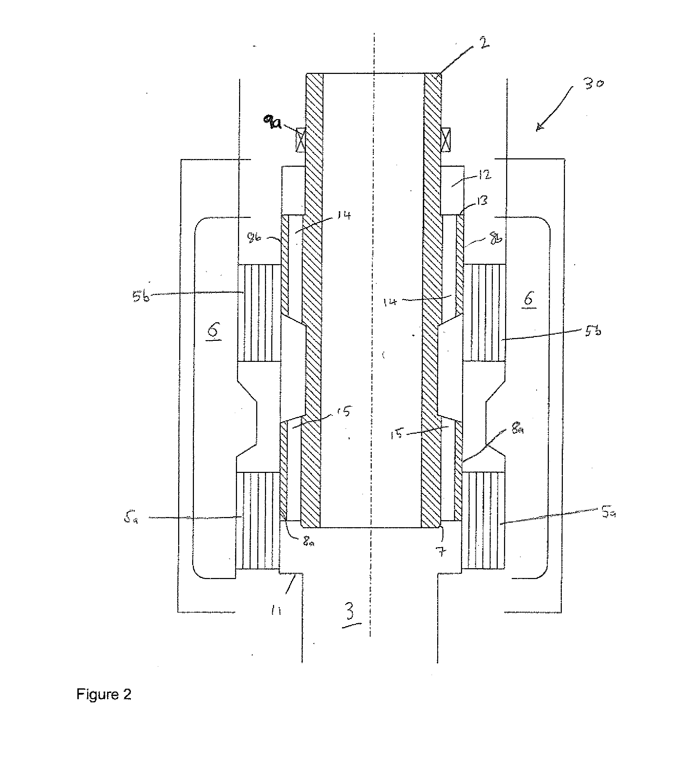

Figure 2 shows a trim means 30 according to an embodiment of the present invention, comprising a plug 2, flow restrictions 5a, 5b, plug seat 11 and pressure balancing seal and guide 9. Around the trim means 30 is an annular region 6. By way of example, the trim means 30 will be described with the annular region 6 as the inlet, and a further port 3 adjacent to the plug seat 11 as the outlet. It will be appreciated that fluid can flow in either direction.

In common with the prior art, the plug 2 is again substantially cylindrical, and is axially moveable between a closed position in which it substantially prevents flow through the trim means 30 and an open position in which the plug 2 does not limit flow. The plug comprises a sealing portion 7 at the shoulder of one end of the plug 2, which sealingly engages with a corresponding valve seat 11 in the closed position.

In contrast to the prior art arrangement, the plug 2 of the embodiment has a two substantially cylindrical flow control elements 8a, 8b spaced apart along the axis of the plug 2. Each flow control element 8a, 8b, controls a flow area through a respective flow restriction 5a, 5b. Each flow restriction 5a, 5b is a substantially cylindrical arrangement of concentric perforated cages, disposed concentrically around the plug 2 adjacent to the respective flow control element 8a, 8b, in fluid communication with the annular volume 6. In other embodiments the flow restriction may comprise a stack of plates or discs.

With the plug 2 in the closed position, each flow control element 8a, 8b fully closes the flow area through its respective flow restriction 5. Progressive axial movement of the plug 2 towards an open position results in a progressive increase of the flow area through each flow restriction 5a, 5b as each flow control element 8a, 8b moves to uncover the respective adjacent flow restriction 5a, 5b.

The first flow restriction 5a is disposed adjacent to the plug seat 11, and with the plug 2 in an open position, fluid can pass from the annular region 6, through the restriction 5a and out through the port 3. An internal fluid conduit 15 is defined in the plug 2 that passes behind the first flow control element 8a to communicate fluid from the restriction 5b to the output port 3.

Pressure exerted by the fluid on surfaces of the plug that are not parallel to the axis of the plug result in an axial force on the plug. The pressure acting on the end of the plug 2 adjacent to the plug seat 11 therefore exerts an opening force on the plug 2. A further force balancing internal fluid conduit 14 is defined in the plug 2 that passes behind the second flow control element 8b to communicate pressure from the outlet port 3 to surfaces of the plug 2 with an orientation arranged to result in a balancing force that tends to cancel the opening force due to pressure on the plug end adjacent to the plug seat 11.

A trim means has been disclosed that has both a large flow area, and is capable of fast operation due to the short travel between open and closed positions. The trim means of the invention is thought to be of particular benefit where used on valve designs where a conventional design of valve would need to have a long stroke, and in which rapid operation of the valve is required. The use of such a trim means in a valve allows the positive attributes of multiple parallel valves to be combined without the penalties in cost, complexity and reliability associated with such an arrangement. It will be appreciated that in other embodiments, a larger number of spaced flow control elements and respective flow areas may be used to provide increased flow capability without penalty in speed of operation. Valves according to embodiments of the invention can more readily be tailored to economically meet specifications that demand large flow capability and fast speed of response.

Although an embodiment has been described in which the plug moves axially, in other embodiments the plug may for instance rotate to control flow areas, with each flow control element being spaced apart along a circumference of a plug. In other embodiments, the plug may have a non cylindrical shape, for example having a tapering circular section or a rectangular section.

Although a flow restriction comprising concentric perforated cages has been described, it will be appreciated that other flow restrictions are possible, for example labyrinthine restrictors, or slotted restrictors. In some embodiments, the flow area controlled by the plug flow control elements may not have an associated flow restriction.

In the example embodiment, the plug is disposed concentrically inside the flow restriction, but in other embodiments this arrangement may be reversed, with a moveable plug being disposed concentrically around a flow restriction.

It will be appreciated that a wide range of other modifications and alterations may be made to the arrangements described hereinbefore without departing from the scope of the invention, as defined in the appended claims.

## Claims

1. A trim means for a valve, comprising a plug (2) engageable with a seat (11), and **characterised by** a plurality of flow control elements (8a, 8b) that are moveable along a path to control flow through the trim means, wherein: the flow control elements (8a, 8b) are spaced apart along the path, each flow control element (8a, 8b) defining a corresponding flow path, and movement of each flow control element (8a, 8b) along the path progressively varying the flow area through its corresponding flow path.

2. The trim means of claim 1, wherein the plug (2) comprises a linking fluid conduit 15) that communicates between a first flow path and a second flow path.

3. The trim means of claim 1 or claim 2, wherein the plug (2) has an axis along which it moves, thereby moving the flow control elements (8a, 8b).

4. The trim means of any preceding claim, wherein each flow path has a corresponding flow restrictor (5a, 5b).

5. The trim means of claim 4, wherein the flow restrictor (5a, 5b) comprises a substantially cylindrical cage with a plurality of slots or holes.

6. The trim means of claim 5, wherein the flow restrictor (5a, 5b) comprises a plurality of concentric cylindrical cages, each with a plurality of slots or holes.

7. The trim means of claim 4, wherein the flow restrictor (5a, 5b) comprises a plurality of discs or plates.

8. The trim means of claim 4 to 6, wherein the flow restrictor (5a, 5b) comprises a labyrinthine flow conduit.

9. The trim means of any preceding claim, wherein the plug (2) has a circular cross section.

10. The trim means of claim 8, wherein the plug (2) is substantially cylindrical.

11. The trim means of claim 8 or 9, wherein each flow control element (8a, 8b) comprises a substantially cylindrical portion and each flow path comprises an annular region.

12. The trim means of claim 10, wherein each flow path is disposed at least partly around the exterior of the plug (2).

13. The trim means of any preceding claim, where each of the flow control elements (8a, 8b) and corresponding flow paths have substantially the same configuration.

14. The trim means of any preceding claim, wherein the plug (2) comprises a force balancing fluid conduit that communicates fluid pressure to a portion of the plug (2) to reduce the net axial force on the plug (2) that would result from use of the trim means with a pressurised fluid.

15. A choke, control and/or anti-surge control valve comprising the trim means of any preceding claim.
